# EUROPEAN PATENT APPLICATION

(11) **EP 2 827 563 A1**
(43) Date of publication of application: **21.01.2015**
(21) Application number: 12871030.8
(22) Date of filing: 30.05.2012
(51) Int. Cl.: H04M 1/02, G04G 9/04

(54) **PORTABLE TERMINAL**

(30) Priority: 15.03.2012 CN 201220097195 U
(71) Applicant: ZTE Corporation, Shenzhen, Guangdong 518057 (CN)
(72) Inventor: MA, Yinyin, Shenzhen Guangdong 518057 (CN)
(74) Representative: Novagraaf Technologies
(86) International application number: PCT/CN2012/076269
(87) International publication number: WO 2013/135006

(57) **Abstract**

A portable terminal comprises at least 12 clock indicator lights which are distributed at equal intervals and configured around a display screen of the portable terminal, wherein each clock indicator light serves as a clock graduation; a power supply unit configured to connect to each clock indicator light respectively; and a control unit configured to connect to the power supply unit, according to a current time, control the power supply unit to supply power for the clock indicator light corresponding to a hour hand position on a clock of the current time by adopting a preset first color, and control the power supply unit to supply power for the clock indicator light corresponding to a minute hand position on the clock of the current time by adopting a preset second color. By combining with a wrist watch dial, the terminal overcomes the problem that it is not simple to read the time when the terminal is in a standby state and at the same time also enhances user experience and promotes the overall appearance of a cellphone, and adds the vitality to the cellphone.

## Description

### Technical Field

The present invention relates to the communication technology field, and in particular, to a portable terminal.

### Background of the Related Art

With the development of the electronic technology, all kinds of terminal devices appear on the market, including tablet PC, mobile phone, MP3, MP4, etc. In the current touch-sensitive screen era, the appearances of a lot of terminal devices are all very much the same, there are not too many differences, and the models at every price are basically composed of one big touch-sensitive screen and several buttons (touchable). The touch-sensitive screen and the terminal border of all kinds of models will have a large or small blank space, and some terminals will add some trade marks in the blank space for padding, however, it is not yet enough to cover up the waste of the space.

With the popularization of all kinds of terminals, the traditional wrist watch has already fade out the scope of the necessary of life of most people gradually, and in turn, each kind of hand-held terminal replaces the function of checking the time of the wrist watch. On the basis of the original intention of the power saving, most terminal is in the black screen state during the standby state, and it generally needs to perform three steps, first pressing the power button to lighten the screen, reading the time and turning off the power button, when checking the time, and most people will repeat this action for many times to check the time every day.

### Content of the Invention

The present invention provides a portable terminal, to overcome the problem that it is not simple to read the time by the terminal in the related art.

In order to solve the above-mentioned problem, the present invention provides a portable terminal, comprising:
at least 12 clock indicator lights which are distributed at equal intervals and configured around a display screen of the portable terminal, wherein each clock indicator light serves as a clock graduation;
a power supply unit, configured to connect to each clock indicator light respectively; and
a control unit, configured to connect to the power supply unit, according to a current time, control the power supply unit to supply power for the clock indicator light corresponding to a hour hand position on a clock of the current time by adopting a preset first color, and control the power supply unit to supply power for the clock indicator light corresponding to a minute hand position on the clock of the current time by adopting a preset second color.

Preferably, the portable terminal is configured with 60 clock indicator lights;
the control unit is further configured to: control the power supply unit to supply power for the clock indicator light corresponding to a second hand position on the clock of the current time by adopting a preset third color.

Preferably, the control unit is further configured to: control the power supply unit to supply power for the clock indicator light corresponding to the second hand position on the clock of the current time by adopting the preset third color different from the above-mentioned two colors, comprising:
controlling the power supply unit to supply power for the clock indicator light corresponding to the second hand position on the clock of the current time by adopting a preset third color, wherein, an electric current size changes gradually in a power supply process.

Preferably, the control unit further configured to: when the portable terminal starts a compass function, according to current pointing of a compass, control the power supply unit to supply power for the clock indicator light corresponding to a south side position pointed by a pointer of the compass by adopting the first color, and supply power for the clock indicator light corresponding to a north side position pointed by the pointer of the compass by adopting the second color.

Preferably, every clock indicator light is composed of lights which are arranged into one group.

By combining with a wrist watch dial, the terminal provided by the present invention overcomes the problem that it is not simple to read the time when the terminal is in a standby state in the related art, and at the same time also enhances the user experience and promotes the overall appearance of a cellphone, and adds the vitality to the cellphone.

### Brief Description of Drawings

FIG. 1 is a structure diagram of a portable terminal in an embodiment of the present invention;
FIG. 2 is a diagram of a cellphone in an embodiment of the present invention;
FIG. 3 is a diagram of another cellphone in an embodiment of the present invention.

### Preferred Embodiments of the Present Invention

In order to make the objective, technical scheme and advantage of the present invention much more clear and obvious, the embodiment of the present invention is described in detail with reference to the accompanying drawings hereinafter. It should be illustrated that, in the case of not conflicting, the embodiments in the present application and features in these embodiments can be combined with each other.

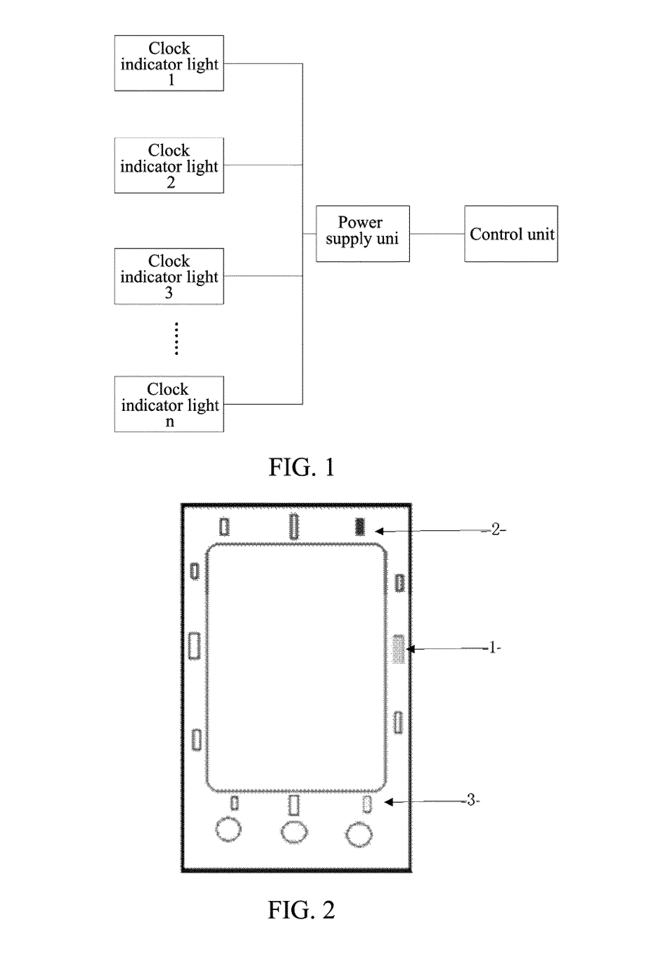

In the present embodiment, as shown in FIG. 1, a portable terminal includes the following parts:
at least 12 clock indicator lights which are distributed at equal intervals and configured around a display screen, wherein each clock indicator light serves as a clock graduation; each clock indicator light is connected to a power supply unit of the portable terminal respectively; a control unit in the portable terminal is connected to the above-mentioned power supply unit; according to a current time, the control unit controls the power supply unit to supply power for the clock indicator light corresponding to a hour hand position on a clock of the current time by adopting a preset first color, and controls the power supply unit to supply power for the clock indicator light corresponding to a minute hand position on the clock of the current time by adopting a preset second color.

Obviously, when the portable terminal is configured with 60 clock indicator lights, the control unit further can control the power supply unit to supply power for the clock indicator light corresponding to a second hand position on the clock of the current time by adopting the preset third color different from the above-mentioned two colors. Under this situation, in order to have good display results, for the clock indicator light corresponding to the second hand position, the power supply unit can supply power for it by adopting the mode that the electric current size changes gradually.

In this way, the user can distinguish the hour, minute and second unit through the color, and obtains the current time easily. The panel of the wrist watch and the blank space on each kind of terminal plane are combined together, which not only can beautify the terminal appearance design, but also can help people use the terminal to check the time directly.

The present invention is described in more detail through the specific embodiments with reference to the accompanying drawings hereinafter.

### Embodiment one

The present embodiment takes the cellphone as an example, but the applicable portable terminal in the present embodiment is not limited to the cellphone, for example, it also can be a portable computer, a tablet computer, MP3, MP4, etc.

FIG. 2 is a diagram of a cellphone in an embodiment of the present invention, and the cellphone includes 12 clock indicator lights.

The present embodiment is used for controlling the terminal to read the current time directly during the standby process, and it does not need the manual extra operation of lighting the screen.

In the example of FIG. 2, the hour, the minute and the second are distinguished through the colors; assuming that the green color represents the hour, the red color represents the minute, and the yellow color represents the second; and the current clock indicator light 1 is green, the clock indicator light 2 is red, and the clock indicator light 3 is yellow; then the time shown in FIG. 2 is 3: 05: 25s. It can be seen from the above-mentioned explanation that it is convenient to read and the operation of lighting the whole screen is reduced, which can also accumulate saving more electric quantity. The power consumption of the whole screen is not in a same level with the power consumption of several indicator lights, and therefore, generally speaking, it can save the electric quantity.

The present invention makes some supplements on the appearance, which pads the blank between the screen and the cellphone border and lets the wrist watch dial element appear in the interface design of the cellphone, and the structure is simple and the cost is cheap.

### Embodiment two

The present embodiment takes the cellphone as an example, but the terminal in the present invention is not limited to the cellphone, for example, it also can be a portable computer, a tablet computer, MP3, MP4, etc.

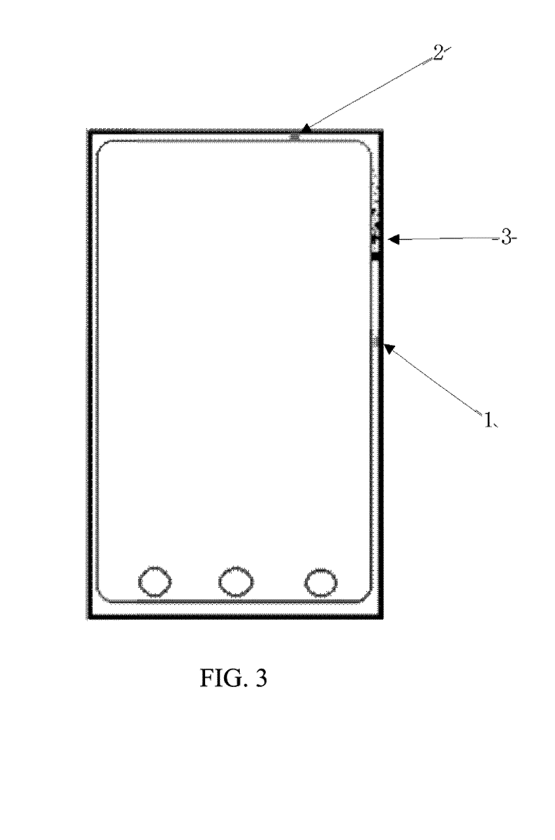

FIG. 3 is a diagram of another cellphone in an embodiment of the present invention. Each clock indicator light in the cellphone is composed of a group formed of many small lights, and the clock indicator light representing the second hand can build out a section of small meteor by using the light-and-gradually-dark mode.

The present embodiment is used for controlling the terminal to read the current time directly during the standby process, and it does not need the manual extra operation of lighting the screen.

In the example of FIG. 3, the hour and the minute are distinguished through the colors; for example, the green color represents the hour, the red color represents the minute, and the small meteor head represents the second; and the current clock indicator light 1 is green, the clock indicator light 2 is red, and the clock indicator light 3 is yellow; then the time shown in FIG. 3 is about 3: 05: 10s, which is convenient to read.

The material selected by the design of the scheme can be a little more beautiful and compact. To pad the blank between the screen and the cellphone border:
every clock indicator light can be padded by using one group of lights which are arranged densely, and itself can build the glittering result.

No matter which kind of material is selected for padding, it is for the purpose of earning the beauty of the appearance design of the cellphone finally. As shown in FIG. 3, when the padding material uses the light-and-gradually-dark mode to display the second hand, it will form a section of dragged small meteor, which is very beautiful, and then even the cellphone is in the standby state, the dragged meteor will make the cellphone be efficacious and with vitality as well.

Certainly, such a design is not merely limited to reading the time, it can use cooperatively with the commonly used cellphone software as well when not in the standby state, for example:
combined with the compass, when rotating the cellphone, the control unit, according to current pointing of the compass, can control the power supply unit to supply power for the clock indicator light corresponding to a south side position pointed by a pointer of the compass by adopting a predetermined first color, and supply power for the clock indicator light corresponding to a north side position pointed by the pointer of the compass by adopting the predetermined second color.

Cooperated with the gravity sensor function, the cellphone is rotated during the standby state, and the clock display has more innervation; and it can innovate and develop some playing methods together with the indicator light during the non-standby state.

Cooperated with other software, for example, it will generally have sound for cooperation currently when the game is cleared, and now the light can be added for cooperation, etc.

It can be understood by those skilled in the art that all or part of steps in the above-mentioned method can be fulfilled by programs instructing the relevant hardware components, and the programs can be stored in a computer readable storage medium such as a read only memory, a magnetic disk or an optical disk, etc. Alternatively, all or part of the steps in the above-mentioned embodiments can be implemented with one or more integrated circuits. Accordingly, each module/unit in the above-mentioned embodiments can be implemented in the form of hardware, or in the form of software function module. The present invention is not limit to any specific form of the combination of the hardware and software.

The above description is only the preferred embodiments of the present invention and is not intended to limit the protection scope of the present invention. The present invention can have a variety of other embodiments according to the content of the invention. Those skilled in the art can make the corresponding modifications and variations according to the present invention without departing from the spirit and essence of the present invention. All of modifications, equivalents and/or variations without departing from the spirit and essence of the present invention should be embodied in the scope of the appending claims of the present invention.

### Industrial Applicability

By combining with a wrist watch dial, the terminal provided by the present invention overcomes the problem that it is not simple to read the time when the terminal is in a standby state in the related art, and at the same time also enhances the user experience and promotes the overall appearance of a cellphone, and adds the vitality to the cellphone.

## Claims

1. A portable terminal, comprising:
at least 12 clock indicator lights which are distributed at equal intervals and configured around a display screen of the portable terminal, wherein each clock indicator light serves as a clock graduation;
a power supply unit, configured to connect to each clock indicator light respectively; and
a control unit, configured to connect to the power supply unit, according to a current time, control the power supply unit to supply power for the clock indicator light corresponding to a hour hand position on a clock of the current time by adopting a preset first color, and control the power supply unit to supply power for the clock indicator light corresponding to a minute hand position on the clock of the current time by adopting a preset second color.

2. The terminal according to claim 1, wherein,
the portable terminal is configured with 60 clock indicator lights;
the control unit is further configured to: control the power supply unit to supply power for the clock indicator light corresponding to a second hand position on the clock of the current time by adopting a preset third color.

3. The terminal according to claim 2, wherein,
the control unit is further configured to: control the power supply unit to supply power for the clock indicator light corresponding to the second hand position on the clock of the current time by adopting a preset third color different from the above-mentioned two colors, comprising:
controlling the power supply unit to supply power for the clock indicator light corresponding to the second hand position on the clock of the current time by adopting a preset third color, wherein, an electric current size changes gradually in a power supply process.

4. The terminal according to claim 1, wherein,
the control unit further configured to: when the portable terminal starts a compass function, according to current pointing of a compass, control the power supply unit to supply power for the clock indicator light corresponding to a south side position pointed by a pointer of the compass by adopting the first color, and supply power for the clock indicator light corresponding to a north side position pointed by the pointer of the compass by adopting the second color.

5. The terminal according to any one of claims 1∼4, wherein,
every clock indicator light is composed of lights which are arranged into one group.
